# EUROPÄISCHE PATENTSCHRIFT

(11) **EP 1 108 127 B1**
(45) Veröffentlichungstag und Bekanntmachung des Hinweises auf die Patenterteilung: **12.03.2003**
(21) Anmeldenummer: 99941653.0
(22) Anmeldetag: 21.08.1999
(51) Int. Cl.: F02B 47/08

(54) **MEHRZYLINDRIGE BRENNKRAFTMASCHINE UND VERFAHREN ZUM BETREIBEN EINER SOLCHEN**
MULTIPLE-CYLINDER INTERNAL COMBUSTION ENGINE AND A METHOD FOR OPERATING THE SAME
MOTEUR MULTICYLINDRE ET SON MODE DE FONCTIONNEMENT

(30) Priorität: 26.08.1998 DE 19838725
(43) Veröffentlichungstag der Anmeldung: 20.06.2001
(73) Patentinhaber: MTU Friedrichshafen GmbH, 88040 Friedrichshafen (DE)
(72) Erfinder: REMMELS, Werner, D-88090 Immenstaad (DE)
(86) Internationale Anmeldenummer: EP9906138
(87) Internationale Veröffentlichungsnummer: WO00012884

(56) Entgegenhaltungen:
- EP-A- 0 442 981
- EP-A- 0 889 220
- DE-C- 4 331 509

## Beschreibung

Die Erfindung betrifft eine mehrzylindrige Brennkraftmaschine und ein Verfahren zum Betrieb einer solchen Brennkraftmaschine.

Eine wirksame Maßnahme zur Senkung der Stickoxidemissionen bei Brennkraftmaschinen besteht in der Abgasrückführung. Dies wird über eine Absenkung des Sauerstoffpartikeldrucks im zugeführten Frischgas erzielt. Ein derartiges System ist z. B. aus der EP 0 442 981 B1 bekannt. Bei der darin dargestellten Brennkraftmaschine wird das Abgas eines Geberzylinders in ein gemeinsames Ansaugsammelrohr eingespeist. Allen Zylindern wird somit ein Gemisch aus Ansaugluft und rückgeführtem Abgas zugeführt.

Aus der von der Anmelderin stammenden DE 43 31 509 C1 ist ebenfalls ein geteilter Motor mit Abgasrückführungssystem bekannt. Der geteilte Motor besteht aus Nehmerzylindern, nachfolgend als erste Zylinder bezeichnet und wenigstens einem Geberzylinder, nachfolgend als zweiter Zylinder bezeichnet. Das Ansaugsystem ist hierbei zweigeteilt. Die ersten Zylinder erhalten ein Gemisch aus Ansaugluft und rückgeführtem Abgas des zweiten Zylinders. Der zweite Zylinder erhält ausschließlich Ansaugluft.

Ausgehend vom zuvor beschriebenen Stand der Technik liegt der Erfindung die Aufgabe zugrunde, diesen im Hinblick auf eine weitere Absenkung der Stickoxidemissionen weiterzuentwickeln.

Diese Aufgabe wird einerseits durch ein Verfahren zum Betrieb einer mehrzylindrigen Brennkraftmaschine gelöst, wie es im Anspruch 1 angegeben ist, und andererseits durch eine mehrzylindrige Brennkraftmaschine mit den im Anspruch 8 angegebenen Merkmalen.

Das erfindungsgemäße Verfahren sieht gemäß Anspruch 1 für eine gattungsgemäße Brennkraftmaschine vor, daß die Regelung der eingespritzten Kraftstoffmenge des zweiten Zylinders (7) unterschiedlich von der Regelung der eingespritzten Kraftstoffmenge der ersten Zylinder (2-6) erfolgt.

Ein wesentlicher Vorteil des erfindungsgemäßen Verfahrens ist es, daß durch die unabhängige Regelung über einen weiten Betriebsbereich eine Absenkung der Stickoxidemissionen möglich ist, wobei gleichzeitig die Brennkraftmaschine optimal in Hinblick auf ihre Leistungsausbeute betrieben werden kann.

Hierzu wird zur Anhebung des Sauerstoffpartialdrucks des den ersten Zylindern zugeführten Frischgases die dem zweiten Zylindern eingespritzte Kraftstoffmenge reduziert. Gleichzeitig kann zusammen mit der Reduzierung der dem zweiten Zylindern eingespritzten Kraftstoffmenge die den ersten Zylindern eingespritzte Kraftstoffmenge angehoben werden. Der Vorteil besteht darin, daß die Reduktion des Kraftstoffeinsatzes für den Spenderzylinder (zweite Zylinder) nicht wie bei einer konventioneller Abgasrückführung mit Reduktion des Kraftstoffeinsatzes für alle Zylinder eine starke Abnahme des Verbrennungshöchstdrucks verbunden ist. Dies ist insbesondere vorteilhaft bei aufgeladenen Motoren, bei denen die Reduktion des Kraftstoffeinsatzes an den nur wenigen Spenderzylindern den Ladedruck nur gering beeinflußt und durch die Anhebung der den ersten Zylindern (Nehmerzylinder) eingespritzten Kraftstoffmenge die Gesamtleistung der Brennkraftmaschine beibehalten wird. Ein weiterer Vorteil besteht darin, daß die Beanspruchung der Kurbelwelle der Brennkraftmaschine durch ungleichmäßige Belastung infolge unterschiedlicher Verbrennungshöchstdrücke in den Zylindern nur wenig zunimmt.

Ferner wird zur Absenkung des Sauerstoffpartialdrucks des den ersten Zylindern zugeführten Frischgases die dem zweiten Zylindern eingespritzte Kraftstoffmenge angehoben. Und in Ausgestaltung hierzu, daß zusammen mit der Anhebung der den zweiten Zylindern eingespritzten Kraftstoffmenge der Beginn der Einspritzung der Kraftstoffmenge in den zweiten Zylinder nach spät verschoben wird. Eine Anhebung des Verbrennungshöchstdrucks des Spenderzylinders (zweite Zylinder) kann somit trotz Anhebung der eingespritzten Kraftstoffmenge vermieden werden.

In Ausgestaltung der Erfindung wird vorgeschlagen, daß der Einspritzbeginn und/oder Einspritzdauer der Kraftstoffeinspritzung für die ersten Zylinder und den zweiten Zylinder unabhängig voneinander eingestellt werden.

Gemäß einer vorteilhaften Weiterbildung des erfindungsgemäßen Verfahrens ist es vorgesehen, daß bei Beschleunigungsvorgängen der Brennkraftmaschine die dem zweiten Zylindern eingespritzte Kraftstoffmenge reduziert oder die Einspritzung von Kraftstoff in die zweiten Zylinder ganz abgeschaltet wird. Hierdurch wird die Rußbildung bei Beschleunigungsvorgängen durch die Abgasrückführung nicht noch zusätzlich verschärft.

Gemäß einer anderen vorteilhaften Weiterbildung des erfindungsgemäßen Verfahrens ist es vorgesehen, daß im Leerlaufbetrieb der Brennkraftmaschine die Kraftstoffeinspritzung in die zweiten Zylinder abgeschaltet wird. Hierdurch ist es möglich, im Leerlaufbetrieb eine Versottung aufgrund Unterkühlung des Abgasstroms unter den Taupunkt im Rückführungsstrang zu vermeiden.

Gemäß Anspruch 5 erfolgt die Regelung des Sauerstoffpartialdrucks des den ersten Zylindern zugeführten Frischgases in Abhängigkeit von einer oder mehrerer der folgenden Größen im Kennfeld des Brennkraftmaschinenbetriebs: Zylinderdruck, Konzentration der Abgaskomponenten, insbesondere NOx, HC, CO, Abgastemperatur, Motordrehmoment, Kraftstoffeinsatz, Ladedruck, Motordrehzahl.

Zur Durchführung des erfindungsgemäßen Verfahrens wird gemäß Anspruch 6 vorgeschlagen, daß die Einspritzung des Kraftstoffs mittels eines Common-Rail-Einspritzsystems erfolgt. Dieses weist einen gemeinsamen Vorspeicher zum Vorhalten von unter Druck stehenden Kraftstoff auf. Der gemeinsame Vorspeicher ist über Einspritzleitungen mit Kraftstoffinjektoren zum Einspritzen des Kraftstoffs in die Zylinder der Brennkraftmaschine verbunden. Zur Regelung der zugeführten Kraftstoffmenge ist eine Steuereinheit vorgesehen.

Alternativ hierzu kann auch ein Einspritzsystem vorgesehen sein, bei dem jedem Kraftstoffinjektor ein Einzelspeicher zugeordnet ist. Dieser wiederum wir über eine Verteilerleitung von einer gemeinsamen Versorgungsleitung mit Kraftstoff versorgt. Die Regelung der Einspritzung wird auch in diesem Fall von der Steuereinheit vorgenommen.

Die Erfindung wird anhand der dargestellten Ausführungsbeispielen erläutert. Es zeigen:
- Fig.1:: Systemschaubild für eine Brennkraftmaschine mit geteilter Frischluftzufuhr;
- Fig. 2:: Systemschaubild für eine Brennkraftmaschine mit gemeinsamer Frischluftzufuhr,
- Fig. 3:: Systemschaubild für eine Brennkraftmaschine mit geteilter Frischluftzufuhr und Einzelspeicher.

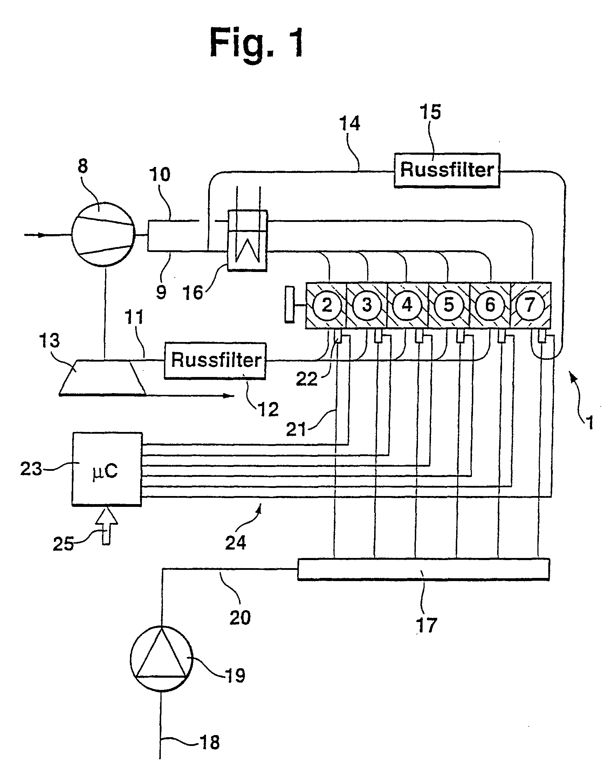

Figur 1 zeigt ein Systemschaubild für eine Brennkraftmaschine. Die Brennkraftmaschine 1 verfügt über eine Anzahl, nämlich 5, von ersten Zylindern 2 - 6 (Nehmerzylinder) und wenigstens einem zweiten Zylinder 7 (Spenderzylinder). Die ersten Zylinder 2 - 6 sind auf ihrer Einlaßseite mit einem Ansaugsammelrohr 9 verbunden, über welches sie mit Frischgas versorgt werden. Der zweite Zylinder 7 ist auf seiner Einlaßseite mit einem vom Ansaugsammelrohr 9 getrennten zweiten Ansaugrohr 10 verbunden. Dem Ansaugsammelrohr 9 und Ansaugrohr 10 wird von einem mit einer Abgasturbine 13 gekoppelten Ansaugluftverdichter 8 eines Abgasturboladers verdichtete Luft zugeführt. Auf der Auslaßseite sind die ersten Zylinder 2 - 6 mit einem Abgassystem 11 verbunden, welches unter Zwischenschaltung eines Rußfilters 12 an die Abgasturbine 13 des Abgasturboladers angeschlossen ist. Der zweite Zylinder 7 ist an seiner Auslaßseite über eine Abgasrückführungsvorrichtung 14, in welche ebenfalls ein Rußfilter 15 geschaltet ist, mit dem Ansaugsammelrohr 9 der ersten Zylinder 2 - 6 verbunden. Stromabwärts der Einmündung der Abgasrückführungsvorrichtung 14 in das Ansaugsammelrohr 9 sowie auch in das Ansaugrohr 10 ist ein Ladeluftkühler 16 geschaltet.

Jeder der Zylinder 2 - 7 der Brennkraftmaschine 1 ist mit einem Kraftstoffinjektor 22 versehen, welcher jeweils über eine Einspritzleitung 21 mit einem gemeinsamen Vorspeicher 17 eines Common-Rail-Kraftstoffeinspritzsystems gekoppelt ist. In dem Vorspeicher 17 wird unter hohem Druck stehender Kraftstoff vorgehalten, welcher mittels einer Hochdruckpumpe 19 von einer Kraftstoffleitung 18 über eine Hochdruckleitung 20 zu eben diesem gemeinsamen Vorspeicher 17 gepumpt wird. Eine Steuereinheit 23 dient zur Steuerung der Einspritzintervalle, nämlich Einspritzbeginn, Einspritzdauer, Einspritzende der Kraftstoffinjektoren 22, welche jeweils über Steuerleitungen 24 an die Steuereinheit 23 angeschlossen sind.

Die Steuereinheit 23 regelt die eingespritzte Kraftstoffmenge für jeden der Zylinder 2 bis 7 der Brennkraftmaschine 1 entsprechend deren Betriebszustand. Insbesondere ist die Steuereinheit 23 so ausgebildet, daß sie die dem zweiten Zylinder 7 eingespritzte Kraftstoffmenge unterschiedlich von der jeweils den ersten Zylindern 2 - 6 eingespritzten Kraftstoffmenge regelt. Dabei werden Einspritzbeginn und/oder Einspritzdauer und damit auch das Einspritzende der Kraftstoffeinspritzung für die ersten Zylinder 2 - 6 und den zweiten Zylinder 7 unabhängig voneinander eingestellt. Zum Zwecke der Anhebung des Sauerstoffpartialdrucks des den ersten Zylindern 2 - 6 (Nehmerzylinder) zugeführten Frischgases wird die dem zweiten Zylinder 7 (Spenderzylinder) eingespritzte Kraftstoffmenge reduziert, so daß die von dem zweiten Zylinder 7 abgegebene und über die Abgasrückführungsvorrichtung 14 zu dem Ansaugsammelrohr 9 rückgeführte Abgasmenge geringer wird. Gleichzeitig mit der Reduzierung der dem zweiten Zylinder 7 zur Einspritzung zugeführten Kraftstoffmenge wird die den ersten Zylindern 2 - 6 eingespritzte Kraftstoffmenge angehoben, so daß die Gesamtleistung der Brennkraftmaschine beibehalten wird. Insbesondere wird dadurch der Verbrennungshöchstdruck der Brennkraftmaschine und damit der Druck am Abgasturbolader im wesentlichen konstant gehalten. Die Kurbelwelle der Brennkraftmaschine wird durch ungleichmäßige Belastung infolge unterschiedlicher Verbrennungshöchstdrücke in den Zylindern nur geringfügig zusätzlich belastet.

Andererseits wird zur Absenkung des Sauerstoffpartialdrucks des den ersten Zylindern 2 - 6 (Nehmerzylinder) zugeführten Frischgases die den zweiten Zylindern 7 (Spenderzylinder) eingespritzte Kraftstoffmenge angehoben, wodurch die von der Ausgangsseite des zweiten Zylinders 7 über die Abgasrückführungsvorrichtung 14 dem Ansaugsammelrohr 9 rückgeführte Abgasmenge zunimmt. Durch eine Verschiebung des Beginns der Einspritzung der Kraftstoffmenge in den zweiten Zylinder 7 nach spät zusammen mit der Anhebung der dem zweiten Zylinder 7 eingespritzten Kraftstoffmenge kann eine Anhebung des Verbrennungshöchstdrucks des Spenderzylinders ausgeglichen werden.

Zur Reduzierung von Rußbildung kann bei Beschleunigungsvorgängen der Brennkraftmaschine die dem zweiten Zylinder 7 eingespritzte Kraftstoffmenge reduziert oder ganz abgeschaltet werden. Im Leerlaufbetrieb kann die Kraftstoffeinspritzung in den zweiten Zylinder 7 ebenfalls abgeschaltet werden, um eine Versottung der Abgasrückführungsvorrichtung 14 einschließlich des Rußfilters 15 durch Unterkühlung des Abgasstroms unter den Taupunkt zu verhindern.

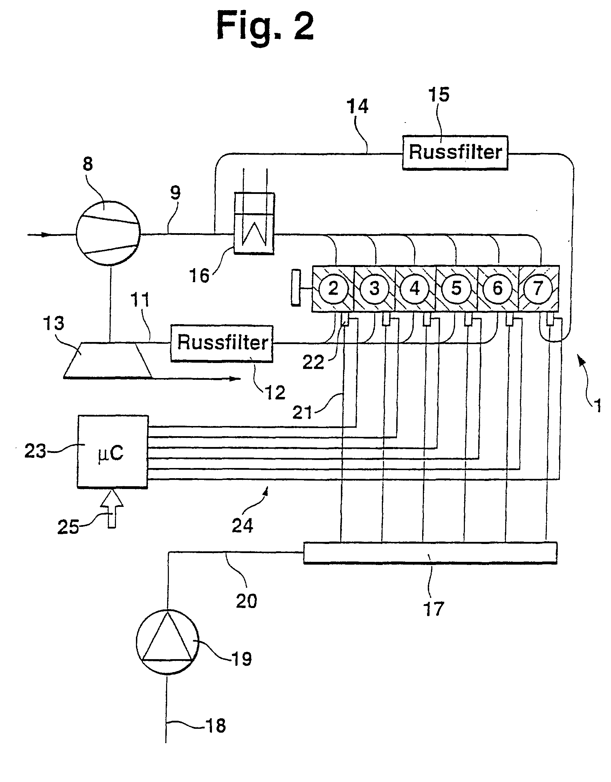

Figur 2 zeigt ein Systemschaubild für eine Brennkraftmaschine mit einer gemeinsamen Frischluftzufuhr zur Durchführung des erfindungsgemäßen Verfahrens. Identische Bauteile zur Figur 1 sind mit den selben Bezugszeichen versehen. Der Unterschied zur Figur 1 besteht darin, daß hier sowohl die ersten Zylinder 2 bis 6 als auch der zweite Zylinder 7 über ein Ansaugsammelrohr 9 mit Frischgas versorgt werden. Die mit dem zweiten Zylinder 7 gekoppelte Abgasrückführungsvorrichtung 14 mündet via Rußfilter 15 in dieses Ansaugsammelrohr 9. Für den Ablauf des Verfahrens gilt das unter Figur 1 gesagte.

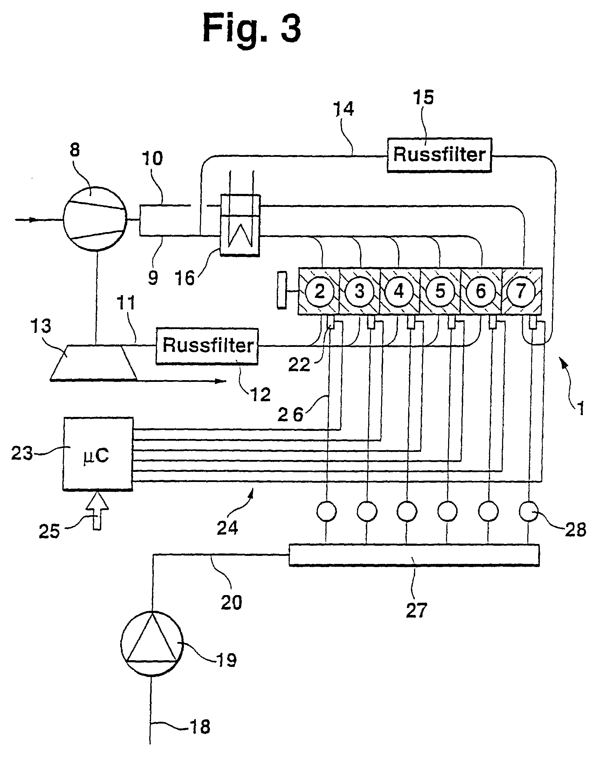

Figur 3 zeigt ein Systemschaubild für eine Brennkraftmaschine mit geteilter Frischluftzufuhr und Einzelspeicher. Die zu Figur 1 und 2 identischen Bauteile sind ebenfalls mit den gleichen Bezugszeichen versehen. Von der Hochdruckpumpe 19 wird eine gemeinsame Versorgungsleitung 27 gespeist. Von der gemeinsamen Versorgungsleitung 27 zweigen Verteilerleitungen 26 zu den Kraftstoffinjektoren 22 ab. In diesen Verteilerleitungen 26 sind Einzelspeicher 28 vorgesehen. In Figur 3 ist eine geteilte Gemischzuführung, bestehend aus Ansaugsammelrohr 9 und Absaugrohr 10, dargestellt. Selbstverständlich läßt sich das Einspritzsystem bestehend aus der gemeinsamen Versorgungsleitung 27, Verteilerleitungen 26 und Einzelspeichem 28 auf das in Figur 2 dargestellte System mit einem gemeinsamen Ansaugsammelrohr übertragen. Für den Ablauf des Verfahrens und die Funktion gilt das in Figur 1 gesagte.

Die Steuerung des Sauerstoffpartialdrucks in den ersten Zylindern 2 - 6 über die Regelung der dem zweiten Zylinder 7 zugeführten Kraftstoffmenge erfolgt sowohl bei stationärem als auch bei instationärem Motorbetrieb im Kennfeld in Abhängigkeit der relevanten Motorbetriebsgrößen. Hierfür bieten sich an
- Zylinderdruck (Messung mittels Drucksensor im Zylinder) und/oder
- Konzentration von Abgaskomponenten wie z.B. NOx, HC, CO, usw. (Messung mittels Gaskonzentrationssensor) und/oder
- Abgastemperatur (Messung mittels Temperatursensor im Abgasstrang) und/oder
- Motordrehmoment (Messung mittels Drehmomentsensor und/oder
- Kraftstoffeinsatz (Messung mittels Kraftstoffmassenstromsensor) und/oder
- Ladedruck (Messung mittels Drucksensor) und/oder
- Motordrehzahl (Messung mittels Drehzahlsensor an Kurbelwelle)
- Ladelufttemperatur (Temperatursensor im Frischluftstrang).

Bei instationärem Motorbetrieb kann auch die eingespritzte Kraftstoffmenge in Abhängigkeit der oben genannten Größen gesteuert werden.

Diese Eingangsgrößen 25 werden in der Steuereinheit 23 erfaßt. Hieraus bestimmt die Steuereinheit 25 die für den Betrieb der Brennkraftmaschine 1 notwendigen Parameter.

### Bezugszeichenliste

- 1: Brennkraftmaschine
- 2: erster Zylinder
- 3: erster Zylinder
- 4: erster Zylinder
- 5: erster Zylinder
- 6: erster Zylinder
- 7: zweiter Zylinder
- 8: Ansaugluftverdichter
- 9: Ansaugsammelrohr
- 10: Ansaugrohr
- 11: Abgassystem
- 12: Rußfilter
- 13: Abgasturbine
- 14: Abgasrückführungsvorrichtung
- 15: Rußfilter
- 16: Ladeluftkühler
- 17: gemeinsamer Vorspeicher
- 18: Kraftstoffleitung
- 19: Hochdruckpumpe
- 20: Hochdruckleitung
- 21: Einspritzleitung
- 22: Kraftstoffinjektor
- 23: Steuereinheit
- 24: Steuerleitung
- 25: Eingangsgrößen
- 26: Verteilerleitung
- 27: gemeinsame Versorgungsleitung
- 28: Einzelspeicher

## Patentansprüche

1. Verfahren zum Betrieb einer Brennkraftmaschine (1), die erste Zylindern (2 - 6) und wenigstens einen zweiten Zylinder (7) aufweist, der zweite Zylinder (7) als Spenderzylinder dient, indem dessen Abgas über eine Abgasrückführungsvorrichtung (14) dem Frischgas zugeführt wird, und mit einem Einspritzsystem zum Einspritzen von Kraftstoff in die ersten (2 - 6) und den zweiten Zylinder (7) der Brennkraftmaschine (1), **dadurch gekennzeichnet, daß** die Regelung der eingespritzte Kraftstoffmenge des zweiten Zylinders (7) unterschiedlich von der Regelung der eingespritzten Kraftstoffmenge der ersten Zylindern (2 - 6) erfolgt, wobei zur Anhebung des Sauerstoffpartialdrucks des den ersten Zylindern (2 - 6) zugeführten Frischgases die dem zweiten Zylindern (7) eingespritzte Kraftstoffmenge reduziert wird sowie gleichzeitig die den ersten Zylindern (2 - 6) eingespritzte Kraftstoffmenge angehoben wird und zur Absenkung des Sauerstoffpartialdrucks des den ersten Zylindern (2 - 6) zugeführten Frischgases die dem zweiten Zylindern (7) eingespritzte Kraftstoffmenge angehoben wird sowie gleichzeitig der Beginn der Einspritzung der Kraftstoffmenge in die zweiten Zylinder nach spät verschoben wird.

2. Verfahren nach Anspruch 1, **dadurch gekennzeichnet, daß** Einspritzbeginn und/oder Einspritzdauer der Kraftstoffeinspritzung für die ersten Zylinder (2 - 6) und dem zweiten Zylinder (7) unabhängig voneinander eingestellt werden.

3. Verfahren nach Anspruch 1 oder 2, **dadurch gekennzeichnet, daß** bei Beschleunigungsvorgängen der Brennkraftmaschine die dem zweiten Zylinder (7) eingespritzte Kraftstoffmenge reduziert oder die Einspritzung von Kraftstoff in den zweiten Zylinder (7) ganz abgeschaltet wird.

4. Verfahren nach einem der Ansprüche 1 bis 3, **dadurch gekennzeichnet, daß** im Leerlaufbetrieb der Brennkraftmaschine (1) die Kraftstoffeinspritzung des zweiten Zylinders (7) abgeschaltet wird.

5. Verfahren nach einem der Ansprüche 1 bis 4, **dadurch gekennzeichnet, daß** die Regelung des Sauerstoffpartialdrucks des den ersten Zylindern (2 - 6) zugeführten Frischgases in Abhängigkeit von einer oder mehrerer der folgenden Größen im Kennfeld des Brennkraftmaschinenbetriebs erfolgt: Zylinderdruck, Konzentration von Abgaskomponenten, insbesondere NOx, HC, CO, Abgastemperatur, Motordrehmoment, Kraftstoffeinsatz, Ladedruck, Motordrehzahl.

6. Verfahren nach einem der Ansprüche 1 bis 5, **dadurch gekennzeichnet, daß** die Einspritzung des Kraftstoffs mittels einem Common-Rail-Einspritzsystems erfolgt, welches einen gemeinsamen Vorspeicher (17) zum Vorhalten von unter hohem Druck stehendem Kraftstoff und über Einspritzleitungen (21) mit dem gemeinsamen Vorspeicher (17) verbundene Kraftstoffinjektoren (22) zum Einspritzen des Kraftstoffs in die Zylinder (2 - 7) der Brennkraftmaschine (1) und eine Steuereinheit (23) zum Regeln der den Zylindern (2 - 7) zur Einspritzung zugeführten Kraftstoffmenge aufweist, wobei die Regelung der Einspritzung der dem zweiten Zylindern (7) zugeführten Kraftstoffmenge durch die Steuereinheit (23) unabhängig von der Einspritzung der den ersten Zylindern (2 - 6) zugeführten Kraftstoffmenge vorgenommen wird.

7. Verfahren nach einem der Ansprüche 1 bis 5, **dadurch gekennzeichnet, daß** die Einspritzung des Kraftstoffs mittels eines Common-Rail-Einspritzsystems erfolgt, welches für jeden Kraftstoffinjektor (22) einen Einzelspeicher (28) zum Vorhalten von unter hohem Druck stehendem Kraftstoff aufweist, der Einzelspeicher (28) über eine Verteilerleitung (26) mit einer gemeinsamen Versorgungsleitung (27) verbunden ist, und eine Steuereinheit (23) zum Regeln der den Zylindern (2 - 7) zur Einspritzung zugeführten Kraftstoffmenge aufweist, wobei die Regelung der Einspritzung der den zweiten Zylindern (7) zugeführten Kraftstoffmenge durch die Steuereinheit (23) unabhängig von der Einspritzung der den ersten Zylindern (2 - 6) zugeführten Kraftstoffmenge vorgenommen wird.

8. Brennkraftmaschine (1), die erste Zylinder (2 - 6) und wenigstens einen zweiten Zylinder (7) aufweist, der zweite Zylinder (7) als Spenderzylinder dient, indem dessen Abgas über eine Abgasrückführungsvorrichtung (14) dem Frischgas zugeführt wird **dadurch gekennzeichnet, daß** ein Einspritzsystem zum Einspritzen von Kraftstoff in die ersten (2 - 6) und den zweiten Zylinder (7) der Brennkraftmaschine vorgesehen ist, wobei das Einspritzsystem eine von einander unterschiedliche Regelung der eingespritzte Kraftstoffmenge der ersten Zylindern (2 - 6) und des zweiten Zylinders (7) nach Anspruch 1 anwendet.

9. Brennkraftmaschine nach Anspruch 8, **dadurch gekennzeichnet, daß** das Einspritzsystem der Brennkraftmaschine als Common-Rail-Einspritzsystem ausgebildet ist, welches einen gemeinsamen Vorspeicher (17) zum Vorhalten von unter hohem Druck stehendem Kraftstoff und über Einspritzleitungen (21) mit dem gemeinsamen Vorspeicher (17) verbundene Kraftstoffinjektoren (22) zum Einspritzen des Kraftstoffs in die Zylinder der Brennkraftmaschine, sowie eine Steuereinheit (23) zum Regeln der Einspritzung der den Zylindern (2 - 7) zugeführten Kraftstoffmenge aufweist, wobei die Steuereinheit (23) zur Regelung der Einspritzung der den zweiten Zylindern (7) zugeführten Kraftstoffmenge unabhängig von der Einspritzung der den ersten Zylindern (2 - 6) zugeführten Kraftstoffmenge ausgebildet ist.

10. Brennkraftmaschine (1) nach Anspruch 8, **dadurch gekennzeichnet, daß** das Einspritzsystem aus Kraftstoffinjektoren (22), Einzelspeichern (28) zum Vorhalten von unter hohem Druck stehendem Kraftstoff, Verteilerleitungen (26) und einer gemeinsamen Versorgungsleitung (27) und einer Steuereinheit (23) besteht, jedem Kraftstoffinjektor (22) ein Einzelspeicher (28) zugeordnet ist, der Einzelspeicher (28) über die Verteilerleitung (26) mit der gemeinsamen Versorgungsleitung (27) verbundene ist, und die Steuereinheit (23) derart ausgebildet ist, daß eine Regelung der Einspritzung der dem zweiten Zylindern (7) zugeführten Kraftstoffmenge unabhängig von der Einspritzung der den ersten Zylindern (2 - 6) zugeführten Kraftstoffmenge erfolgt.

11. Brennkraftmaschine nach Anspruch 8, 9 oder 10, **dadurch gekennzeichnet, daß** zur Regelung der Einspritzung der dem zweiten Zylinder (7) eingespritzten Kraftstoffmenge und/oder der Einspritzung der den ersten Zylindern (2 - 6) eingespritzten Kraftstoffmenge einer oder mehrere der folgenden Sensoren vorgesehen sind, welche zur Zuführung ihrer Ausgangssignale mit der Steuereinheit (36) gekoppelt sind: Drucksensor im Zylinder, Gaskonzentrationssensor für Abgaskomponenten, Temperatursensor im Abgasstrang, Drehmomentsensor, Kraftstoffmassenstromsensor, Drucksensor für Ladedruck, Drehzahlsensor an der Kurbelwelle.

## Claims

1. Method for operating an internal combustion engine (1) which has first cylinders (2 - 6) and at least one second cylinder (7), the second cylinder (7) serving as a dispenser cylinder as a result of its exhaust gas being fed to the fresh gas via an exhaust-gas recirculation device (14), and having an injection system for injecting fuel into the first cylinders (2 - 6) and the second cylinder (7) of the internal combustion engine (1), **characterized in that** the control of the injected fuel quantity of the second cylinder (7) takes place differently from the control of the injected fuel quantity of the first cylinders (2 - 6), in which method, to increase the oxygen partial pressure of the fresh gas fed to the first cylinders (2 - 6), the quantity of fuel injected to the second cylinder (7) is reduced and, at the same time, the quantity of fuel injected to the first cylinders (2 - 6) is increased, and, in order to reduce the oxygen partial pressure of the fresh gas fed to the first cylinders (2 - 6), the quantity of fuel injected to the second cylinder (7) is increased and, at the same time, the start of injection of the fuel quantity into the second cylinder is shifted to a late position.

2. Method according to Claim 1, **characterized in that** the start of injection and/or the injection duration of the fuel injection for the first cylinders (2 - 6) and the second cylinder (7) are set independently of one another.

3. Method according to Claim 1 or 2, **characterized in that** when the internal combustion engine is accelerating the quantity of fuel injected to the second cylinder (7) is reduced or the injection of fuel into the second cylinder (7) is switched off altogether.

4. Method according to one of Claims 1 to 3, **characterized in that** when the internal combustion engine (1) is in idling mode, the injection of fuel of the second cylinder (7) is switched off.

5. Method according to one of Claims 1 to 4, **characterized in that** the oxygen partial pressure of the fresh gas fed to the first cylinders (2 - 6) is controlled as a function of one or more of the following variables in the characteristic diagram of the internal combustion engine operation: cylinder pressure, concentration of exhaust-gas components, in particular NOx, HC, CO, exhaust-gas temperature, engine torque, fuel use, boost pressure, engine speed.

6. Method according to one of Claims 1 to 5, **characterized in that** the injection of the fuel takes place by means of a common rail injection system which has a common temporary store (17) for temporarily holding fuel which is under a high pressure, and fuel injectors (22), which are connected to the common temporary store (17) via injection lines (21), for injecting the fuel into the cylinders (2 - 7) of the internal combustion engine (1) and a control unit (23) for controlling the quantity of fuel fed to the cylinders (2 - 7) for injection, the control of the injection of the quantity of fuel fed to the second cylinder (7) being carried out by the control unit (23) independently of the injection of the quantity of fuel fed to the first cylinders (2 - 6).

7. Method according to one of Claims 1 to 5, **characterized in that** the injection of the fuel is carried out by means of a common rail injection system which, for each fuel injector (22), has an individual store (28) for temporarily holding fuel which is under a high pressure, the individual store (28) is connected to a common supply line (27) via a distributor line (26), and has a control unit (23) for controlling the quantity of fuel fed to the cylinders (2 - 7) for injection, the control of the injection of the quantity of fuel fed to the second cylinders (7) being carried out by the control unit (23) independently of the injection of the quantity of fuel fed to the first cylinders (2 - 6).

8. Internal combustion engine (1) which has first cylinders (2 - 6) and at least one second cylinder (7), the second cylinder (7) serving as a dispenser cylinder as a result of its exhaust gas being fed to the fresh gas via an exhaust-gas recirculation device (14), **characterized in that** there is an injection system for injecting fuel into the first cylinders (2 - 6) and the second cylinder (7) of the internal combustion engine, the injection system using different control of the injected fuel quantity of the first cylinders (2 - 6) and of the second cylinder (7) as described in Claim 1.

9. Internal combustion engine according to Claim 8, **characterized in that** the injection system of the internal combustion engine is designed as a common rail injection system which has a common temporary store (17) for temporarily holding fuel which is under high pressure, and fuel injectors (22), which are connected to the common temporary store (17) via injection lines (21), for injecting the fuel into the cylinders of the internal combustion engine, and a control unit (23) for controlling the injection of the quantity of fuel quantity fed to the cylinders (2 - 7), the control unit (23) being designed to control the injection of the quantity of fuel fed to the second cylinders (7) independently of the injection of the quantity of fuel fed to the first cylinders (2 - 6).

10. Internal combustion engine (1) according to Claim 8, **characterized in that** the injection system comprises fuel injectors (22), individual stores (28) for temporarily holding fuel which is under a high pressure, distributor lines (26) and a common supply line (27) and a control unit (23), each fuel injector (22) is assigned an individual store (28), the individual store (28) is connected to the common supply line (27) via the distributor line (26), and the control unit (23) is designed in such a manner that control of the injection of the quantity of fuel fed to the second cylinder (7) takes place independently of the injection of the quantity of fuel fed to the first cylinders (2 - 6).

11. Internal combustion engine according to Claim 8, 9 or 10, **characterized in that** to control the injection of the quantity of fuel injected to the second cylinder (7) and/or the injection of the quantity of fuel injected to the first cylinders (2 - 6), one or more of the following sensors are provided and are coupled to the control unit (36) in order to supply their output signals: pressure sensor in the cylinder, gas concentration sensor for exhaust-gas components, temperature sensor in the exhaust section, torque sensor, fuel mass flow sensor, pressure sensor for boost pressure, speed sensor at the crankshaft.

## Revendications

1. Procédé pour le fonctionnement d'un moteur à combustion interne (1) qui présente des premiers cylindres (2-6) et, au moins, un deuxième cylindre (7) servant de cylindre distributeur par le fait que son gaz d'échappement est amené vers le gaz frais via un dispositif de recyclage des gaz d'échappement (14), et un système d'injection pour l'injection de carburant dans les premiers cylindres (2-6) et le deuxième cylindre (7) du moteur à combustion interne (1), **caractérisé en ce que** la régulation de la quantité de carburant injectée dans le deuxième cylindre (7) est effectuée de manière différente de la régulation de la quantité de carburant injectée dans les premiers cylindres (2-6), procédé dans lequel, pour augmenter la pression partielle d'oxygène du gaz frais amené dans les premiers cylindres (2-6), la quantité de carburant injectée dans le(s) deuxième(s) cylindre(s) (7) est réduite tandis que, simultanément, la quantité de carburant injectée dans les premiers cylindres (2-6) est augmentée et, pour diminuer la pression partielle d'oxygène du gaz frais amené dans les premiers cylindres (2-6), la quantité de carburant injectée dans le(s) deuxième(s) cylindre(s) (7) est augmentée tandis que, simultanément, le début de l'injection de la quantité de carburant dans les deuxièmes cylindres est retardé.

2. Procédé selon la revendication 1, **caractérisé en ce que** le début de l'injection et/ou la durée de l'injection de carburant dans les premiers cylindres (2-6) et le deuxième cylindre (7) peuvent être réglés indépendamment l'un de l'autre.

3. Procédé selon la revendication 1 ou 2, **caractérisé en ce que**, lors des phases d'accélération du moteur à combustion interne, la quantité de carburant injectée dans le deuxième cylindre (7) est réduite ou l'injection de carburant dans le deuxième cylindre (7) est complètement arrêtée.

4. Procédé selon une des revendications 1 à 3, **caractérisé en ce que**, lors du fonctionnement au ralenti du moteur à combustion interne (1), l'injection de carburant dans le deuxième cylindre (7) est arrêtée.

5. Procédé selon une des revendications 1 à 4, **caractérisé en ce que** la régulation de la pression partielle d'oxygène du gaz frais amené aux premiers cylindres (2-6) a lieu en fonction d'une ou plusieurs des grandeurs suivantes du diagramme caractéristique de fonctionnement du moteur à combustion interne : pression dans le cylindre, concentration en composants de gaz d'échappement, en particulier en NOx, HC, CO, température des gaz d'échappement, couple de rotation du moteur, introduction de carburant, pression de suralimentation, régime moteur.

6. Procédé selon une des revendications 1 à 5, **caractérisé en ce que** l'injection de carburant a lieu au moyen d'un système d'injection avec rampe commune à haute pression, lequel présente un pré-accumulateur commun (17) pour conserver du carburant sous haute pression et des injecteurs de carburant (22) reliés au pré-accumulateur commun (17) par des conduites d'injection (21) afin d'injecter le carburant dans les cylindres (2-7) du moteur à combustion interne (1) et présente aussi une unité de commande (23) pour la régulation de la quantité de carburant amenée pour injection dans les cylindres (2-7), la régulation de l'injection de la quantité de carburant amenée dans le(s) deuxième(s) cylindre(s) (7) étant effectuée par l'unité de commande (23) indépendamment de l'injection de la quantité de carburant amenée aux premiers cylindres (2-6).

7. Procédé selon une des revendications 1 à 5, **caractérisé en ce que** l'injection de carburant a lieu au moyen d'un système d'injection avec rampe commune à haute pression, lequel présente pour chaque injecteur de carburant (22) un accumulateur individuel (28) pour conserver du carburant sous haute pression, l'accumulateur individuel (28) est relié à une conduite d'alimentation commune (27) via une conduite de distribution (26) et présente aussi une unité de commande (23) pour la régulation de la quantité de carburant amenée pour injection dans les cylindres (2-7), la régulation de l'injection de la quantité de carburant amenée dans les deuxièmes cylindres (7) étant effectuée par l'unité de commande (23) indépendamment de l'injection de la quantité de carburant amenée aux premiers cylindres (2-6).

8. Moteur à combustion interne (1) qui présente des premiers cylindres (2-6) et, au moins, un deuxième cylindre (7), lequel deuxième cylindre (7) sert de cylindre distributeur par le fait que son gaz d'échappement est amené vers le gaz frais via un dispositif de recyclage des gaz d'échappement (14), **caractérisé en ce qu'**un système d'injection est prévu pour l'injection de carburant dans les premiers cylindres (2-6) et dans le deuxième cylindre (7) du moteur à combustion interne, le système d'injection utilisant une régulation de la quantité de carburant injectée différente l'une de l'autre pour les premiers cylindres (2-6) et pour le deuxième cylindre (7), selon la revendication 1.

9. Moteur à combustion interne selon la revendication 8, **caractérisé en ce que** le système d'injection du moteur à combustion interne est conçu comme un système d'injection avec rampe commune à haute pression, lequel présente un pré-accumulateur commun (17) pour conserver du carburant sous haute pression et des injecteurs de carburant (22) reliés au pré-accumulateur commun (17) par des conduites d'injection (21) pour injecter le carburant dans les cylindres du moteur à combustion interne ainsi qu'une unité de commande (23) pour la régulation de l'injection de la quantité de carburant amenée aux cylindres (2-7), l'unité de commande (23) étant conçue pour la régulation de l'injection de la quantité de carburant amenée dans les deuxièmes cylindres (7) indépendamment de l'injection de la quantité de carburant amenée aux premiers cylindres (2-6).

10. Moteur à combustion interne (1) selon la revendication 8, **caractérisé en ce que** le système d'injection se compose d'injecteurs de carburant (22), d'accumulateurs individuels (28) pour conserver du carburant sous haute pression, de conduites de distribution (26) et d'une conduite d'alimentation commune (27) et d'une unité de commande (23), à chaque injecteur de carburant (22) correspond un accumulateur individuel (28), ledit accumulateur individuel (28) est relié à la conduite d'alimentation commune (27) par la conduite de distribution (26) et l'unité de commande (23) est conçue de telle manière qu'une régulation de l'injection de la quantité de carburant amenée dans le(s) deuxième(s) cylindre(s) (7) a lieu indépendamment de l'injection de la quantité de carburant amenée aux premiers cylindres (2-6).

11. Moteur à combustion interne selon la revendication 8, 9 ou 10, **caractérisé en ce que**, pour la régulation de l'injection de la quantité de carburant injectée dans le deuxième cylindre (7) et/ou de l'injection de la quantité de carburant injectée dans les premiers cylindres (2-6), il est prévu un ou plusieurs des capteurs suivants, lesquels sont couplés avec l'unité de commande (36) pour l'envoi de leurs signaux de sortie : capteur de pression dans le cylindre, capteur de concentration en gaz pour les composants des gaz d'échappement, sonde de température dans la ligne des gaz d'échappement, capteur de couple de rotation, capteur de débit massique de carburant, capteur de pression de suralimentation, capteur de la vitesse de rotation du vilebrequin.
